# EUROPEAN PATENT APPLICATION

(11) **EP 0 581 722 A1**
(43) Date of publication of application: **02.02.1994**
(21) Application number: 93630052.4
(22) Date of filing: 19.07.1993
(51) Int. Cl.: H04L 12/58

(54) **A method for establishing an interactive communication between users at different workstations in a network**

(30) Priority: 30.07.1992 US 922314
(71) Applicant: YEDA RESEARCH AND DEVELOPMENT COMPANY, LTD., 76 100 Rehovot (IL)
(72) Inventor: Shapiro, Ehud, Rehovot 76100 (IL)
(74) Representative: Waxweiler, Jean

(57) **Abstract**

A method for establishing an interactive communication between at least first and second workstations in a computer network system having a communication protocol for despatching messages between different workstations and being further adapted to exchange batch messages by means of an electronic mail program stored in each of the workstations. The batch messages are categorized such that a batch message of a predetermined category informs a receiving workstation that a sending workstation wishes to establish an interactive communication between a specified first logical port in the sending workstation and a specified second logical port in the receiving station. A batch message of the predetermined category having therein a reference to the first logical port is sent from the first workstation to the second workstation so as to be received thereby and is stored in a storage device containing a list of batch messages. Upon noting the presence in the storage device of a batch message of the predetermined category, the communication protocol is utilized to send an initiation signal from the second logical port in the second workstation to the first logical port in the first workstation. Upon receipt of the initiation signal, an interactive two-way communication is established between the first logical port of the first workstation and the second logical port of the second workstation.

## Description

### FIELD OF THE INVENTION

The invention relates to the use of "electronic mail" for affording message exchange between computer users. In particular, the invention permits communication to be established between users at different terminals connected to a mini-computer or a main frame operating under a multi-tasking operating system, or between users at workstations or network stations (X-terminals) connected by a communication network. It should be noted that throughout the specification and claims, the term "workstation" is used generally to denote any device for communicating interactively with a computer and including a display monitor and an input device such as a keyboard, mouse and so on.

### BACKGROUND OF THE INVENTION

In recent years, there has been a constant growth of computer network installations. This, coupled with the spread of minicomputers and main frames connected to a plurality of terminals, have encouraged the use of network orientated applications. A typical such application is "electronic mail", which enables at least two users to exchange messages.

Several standards, such as "X.400" for OSI or "Multipurpose Internet Mail Extension" (MIME) for "Internet" have been defined to permit message exchange of multiple data types. The messages may consist of different authorized types, such as computer-executable files, computer program-processable files (such as spreadsheets), audio and video sequences, or a combination thereof, as in the case of multi-media.

The electronic mail methods used nowadays are of off-line or batched character, whereby a message, e.g. a text file, is sent from User A to User B and stored in User B's data storage device, usually referred to as a "mailbox". User B, at his earliest convenience which may, of course, be some considerable time later, accesses his mailbox to read any pending messages, and so finds User As text file. He may then respond by sending an acknowledgement message to User A. This simplified protocol demonstrates the off-line character of the connection.

It is possible to re-configure the computer prompt appearing on the screen of User B's computer at the moment the message arrives, whereby User B is provided with immediate feedback that a message is waiting for him. This, in turn, permits User B to generate an immediate response to User A. Nevertheless, the batched character of the communication is retained, since User B's response resides in User As mailbox, and in order to retrieve it, UserAmust invoke a series of instructions, including entering the mailbox and selecting therefrom the message whose contents are to be displayed. If he wishes to answer it immediately, he must prepare a message of a type supported by the electronic mail program, and send the message through the network to User B.

It would clearly be preferable to invoke an interactive session in which a message sent by User A is immediately displayed on User B's screen for direct response by User B. Consider, for example, a firm in which each employee uses a PC all of which are interconnected by a standard network. Suppose an employee (User A) sends a draft of an important letter to his boss (User B). The boss, after reviewing the received draft, wishes to establish an interactive communication with User A, and optionally to involve in the discussion the department manager (User C). Obviously, a copy of User As draft is sent to User C, so as to permit a discussion to be conducted between the three participants.

Alternatively, UserAmay be replaced by a "groupware application" running on a server. Such a groupware application is shared by several users as in the case of a document edited simultaneously by two or more authors. Conventional groupware applications permit each of the authors to effect simultaneous editing of the document whilst being logged into different workstations. However, suppose that during the course of editing, it is required to involve an additional author who is a specialist in a certain topic discussed in the groupware document. In such case, it is required to establish an interactive session between the groupware application (running on one computer) and the specialist user who is generally logged into a different workstation.

It is clear that the above requirements cannot be realized in currently available electronic mailing systems which, as explained above, are not interactive.

In contrast to batch-type electronic mailing systems, it is also known to provide an interactive on-line communication between users across a computer network. Thus, for computers operating under the UNIX operating system, there is provided a facility "TALK" whereby such interactive communication may be achieved between several users. However, "TALK" and other similar interactive communication methods are intrusive since only the user who establishes the communication has control as to when the communication is to be established, whilst all of the remaining users are likely to be disturbed during the performance of other tasks. Thus, typically, if User A invokes the "TALK" facility in order to initiate an interactive communication with User B, a message flashes on the screen of User B's workstation in order to inform him that User A wishes to establish a communication. If User B is otherwise preoccupied and ignores the message, it will reappear at regular intervals until finally User B also invokes the "TALK" facility in order to communicate with User A. Until such communication is established, the constant reappearance of warning-type messages on the screen of User B's workstation is inevitably intrusive and can be most irritating to User B.

Furthermore, if User B repeatedly ignores the messages which appear on his screen advising him of User As desire to establish an interactive dialogue and User A responds in kind, by exiting from the "TALK" facility, no trace of the previous attempts to establish such dialogue is left in User As workstation. Thus, if and when User B is eventually free to respond to the message originally dispatched by User A, there exists no trace on User As workstation of his original attempts to establish such communication and it is thus now User B, and no longer User A, who must initiate the communication.

Additionally, facilities such as "TALK" are intended only for invoking interactive communications between users working at respective workstations and have no provision for establishing such communication between a user and an application or between two applications such as, for example, a groupware document being edited simultaneously by different users at respective workstations.

### BRIEF SUMMARY OF THE INVENTION

It is an object of the invention to provide a method for establishing an interactive dialogue between two or more workstations in such a manner as to preserve the non-intrusive character of batch-type electronic mail systems, whilst nevertheless permitting an interactive multi-way communication to be conducted between the participants.

According to the invention there is provided for use in a computer network system comprising at least first and second workstations adapted to send and receive messages by utilizing a suitable communication protocol and further adapted to exchange batch messages by means of an electronic mail program stored in each of said at least first and second workstations;

a method for establishing an interactive communication between said at least first and second workstations, said method characterized by the steps of:
(i) categorizing said batch messages such that a batch message of a predetermined category informs a receiving workstation that a sending workstation wishes to establish an interactive communication between a specified first logical port in the sending workstation and a specified second logical port in the receiving workstation;
(ii) sending a batch message of the predetermined category having therein a reference to said first logical port from the first workstation to the second workstation so as to be received thereby and stored in storage means containing a list of batch messages;
(iii) monitoring at the second workstation all batch messages in said storage means at specified periods of time;
(iv) noting the presence in said storage means of a batch message of said predetermined category;
(v) utilizing the communication protocol to send an initiation signal from the second logical port in the second workstation to the first logical port in the first workstation; and
(vi) responsive to receipt of the initiation signal, establishing an interactive two-way communication between the first logical port of the first workstation and the second logical port of the second workstation.

In accordance with such a method, the message may be sent directly from an application running in the first workstation for subsequent storage in the mailbox in the second workstation. Upon scanning the mailbox in the second workstation, the user finds a message of the predetermined category, indicating that another user or application on the network wishes to establish a two-way interactive communication with him.

In normal batch-orientated electronic mail systems, each message in a user's mailbox has a corresponding title, by means of which the awaiting message can be identified. It is preferable to embed within the title of the awaiting message some indication that the message is adapted for establishing a two-way interactive communication with a sending workstation. Alternatively, this fact may not be apparent from the title of the message itself, in which case the receiving workstation will not afford the awaiting message any special priority, although the very act of reading the message will invoke the required interactive communication.

According to a preferred embodiment, the method is used in order to establish an interactive communication between a groupware application running on the first workstation and at least one user working at a second workstation who accesses the groupware application via a suitable interface window. In such a system, the interface window at the second workstation is associated with the second logical port thereof so that when the desired two-way interactive communication is established between the first and second logical ports of the first and second workstations, respectively, the groupware application running on the first workstation will interact directly with the user via the interface window of the second workstation.

### BRIEF DESCRIPTION OF THE DRAWINGS

For a clearer understanding of the invention and to see how the same may be carried out in practice, some preferred embodiments will now be described, by way of non-limiting example only, with reference to the accompanying drawings, in which:
Figs. 1a and 1b are block diagrams showing functionally a computer network system and a detail of a workstation thereof for implementing an electronic mail method according to the invention;
Fig. 2 is a simplified flow diagram showing the principal operating steps associated with a sending workstation in the system shown in Fig. 1;
Fig. 3 is a simplified flow diagram showing the principal operating steps associated with a receiving workstation in the system shown in Fig. 1;
Fig. 4 is a flow diagram showing in somewhat greater detail the operating steps shown in Fig. 3; and
Fig. 5 is a composite flow diagram showing the principal operating steps of the system depicted in Fig. 1 operating under UNIX and utilizing the Internet communication protocol.

### DETAILED DESCRIPTION OF PREFERRED EMBODIMENTS

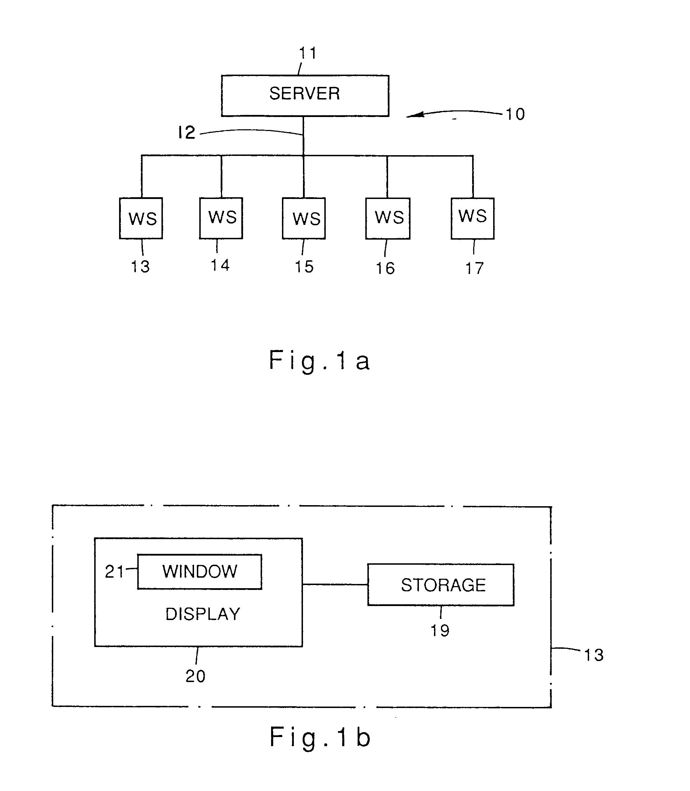

Figs. 1 a and 1 b show a computer network system 10 comprising a server 11 coupled, via a communication network depicted generally as 12 to a plurality of client computers 13 to 17, respectively. Each of the computers 13 to 17 constitutes a workstation associated with which is a storage device 19 and a display device 20. Typically, each of the computers 13 to 17 is adapted to run several tasks simultaneously, data associated with each task being displayed on the display device 20 in a corresponding window 21 thereof.

In accordance with a preferred embodiment, the communication network 12 utilizes the Internet standard as a communication protocol and further utilizes the so-called "Multipurpose Internet Mail Extension" (MIME) for the Internet standard. MIME provides means for exchanging messages between users in an Internet-orientated communication network. The messages may be one of several different categories such as, for example, computer executable files, computer program processable files (such as spreadsheets), audio and video sequences or a combination thereof. The MIME standard permits the definition of a application's specific category. This feature is exploited by the invention for defining a unique category to represent an electronic mail message which is configured to establish a two-way interactive communication between the server 11 and one or more of the client computers 13 to 17.

Typical mail exchange under the MIME standard between computers inter-connected in a network as shown in Fig. 1a is implemented as follows. The server 11 as well as each of the client computers 13 to 17 has access to a stored mail reader program. Upon receipt of a mail message sent from a user of one of the client computers, the received message is stored in a so-called "mailbox" in the storage device 19 associated with the receiving computer. The user of the receiving computer reads the stored message on the display device 20, and by doing so he activates a mail reader program which, in turn, calls a metamail program which assumes that the messages stored in the mailbox are in a format which conforms to the MIME standard.

Once the user has selected the desired mail message to be read, the metamail program accesses the desired message and retrieves therefrom the message category. It will be recalled that the message category typically defines the type of data associated with the transmitted message.

Alist of authorized categories is stored in a database file designated as "mailcap" which instructs the metamail program what action to perform with respect to each of the authorized categories. Thus, if the message is a text file category, then a suitable entry in the mailcap file may cause a standard text editor to be invoked on the user's screen. If, on the other hand, the authorized category denotes that the message is an audio file, then a suitable entry within the mailcap file will specify an audio program which can play back the audio message.

In accordance with the invention, a new authorized category is stored in the mailcap denoting that a batched message associated therewith serves the purpose of establishing an interactive communication between a specified first logical port in the sending workstation and a window 21 in the receiving workstation bound to a specified second logical port. In the description which follows the new, authorized category will be denoted by the term "Active Mail". Associated with the Active Mail category is a procedure which performs a series of steps for establishing an interactive communication between the first and second logical ports in the sending and receiving workstations, respectively.

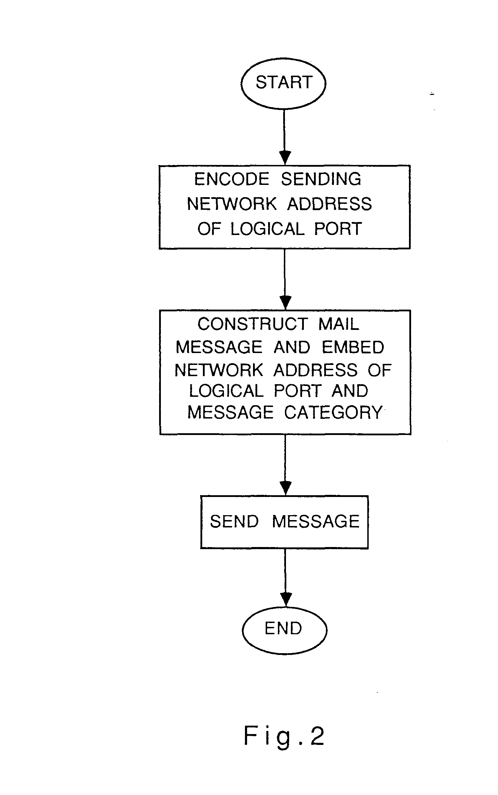

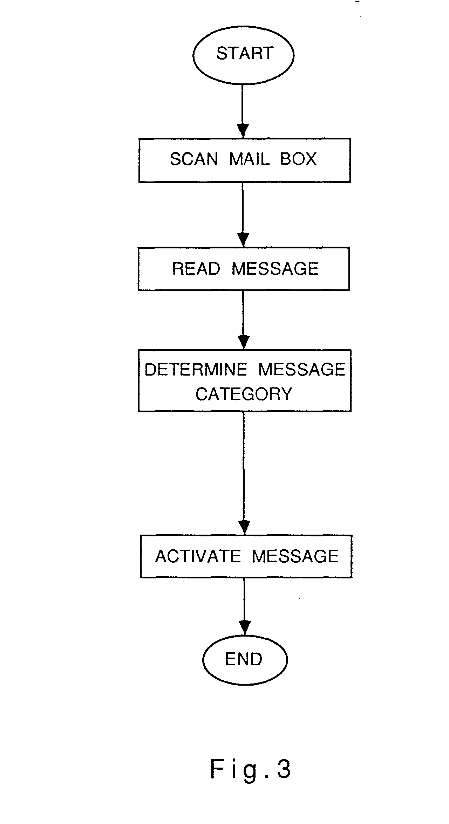

Referring now to Figs. 2 and 3 of the drawings, there are shown simplified flow diagrams relating to the principal operating steps associated with the establishment of an interactive communication by means of electronic mail in accordance with the modified MIME standard. Throughout the following explanation, it will be assumed that a groupware application running on the server 11 wishes to establish an interactive communication with the client computer 13. In a manner that will be described in detail below, the network address of the logical port in the server 11 is encoded and embedded in a suitably constructed mail message which further includes the message category.

Thus in accordance with the terminology introduced above, the message is categorized as "Active Mail" and specifies the name of the sending socket. The thus encoded message is then sent to the client computer 13 where it is stored in the mailbox thereof. Thereafter, the user working at the client computer 13 scans his mailbox and reads the awaiting message using the electronic mail program in the normal way. The awaiting message may, or may not, be flagged as being of type Active Mail in the title by means of which it is identified in the mailbox, thereby prompting the user to read the message contents with some urgency.

In any event, on reading the awaiting message, the message category is decoded and the mailcap is accessed in order to determine the operating instruction which must now be invoked responsive to a message category of the decoded type.

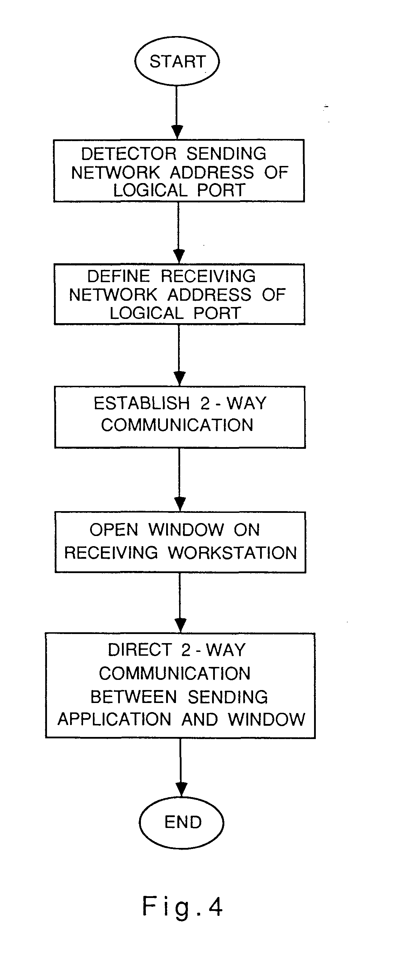

Referring to Fig. 4, this step will now be elaborated on assuming that the relevant instructions stored in the mailcap is a program called "am connect".

Initially, the "am connect" program decodes the network address of the logical port in the server 11 to which a connection is to be established and which is embedded in the received message. Thereafter, a suitable logical port is defined in the receiving workstation for communicating with the decoded network address of the logical port in the server 11. This is followed by a series of operating system primitives which open connection between the two network addresses of the respective logical ports.

Upon completion of the open communication, there exists a bi-directional communication channel between the respective network addresses of logical port in the server 11 and that in the client workstation 13. The "am connect" program may now open a window on the screen of the client workstation 13 for displaying and mediating an interactive communication between the user of client workstation 13 and the groupware application running on the server 11. Obviously, the application which mediates between the user of client workstation 13 and the groupware application running on the server 11 may independently conduct the interactive communication once the communication channel has been established. In such case, the "am connect" program may terminate upon establishment of a successful connection.

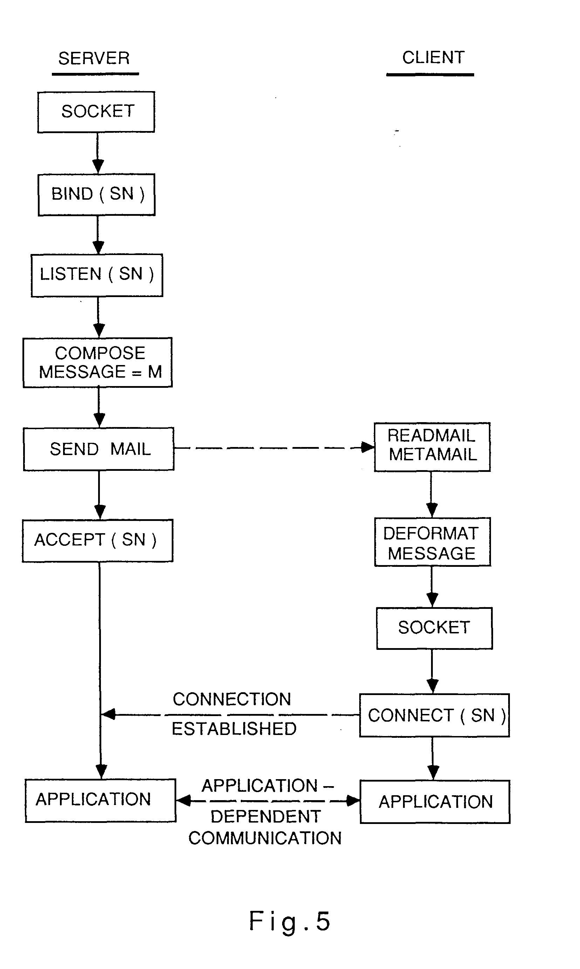

Referring now to Fig. 5, the situation described above generally with respect to Figs. 2 to 4 of the drawings will be described with particular reference to the UNIX operating system and with regard to a communication protocol and an electronic mail system which conform with the "Internet" and "MIME" standard, respectively. Suitable program modules written in the computer programming language "C" for carrying out the routines shown functionally in Fig. 5 are included in an Appendix hereto.

Before describing howan interactive communication is established using a suitably modified electronic mail program operating under UNIX, a further consideration should be understood. In UNIX, the logical ports are implemented using the so-called "socket" mechanism. The socket mechanism enables a workstation having one global Internet address to support a plurality of tasks. In order to distinguish between the various tasks running on the same workstation, a unique global identifier is associated with each of the running tasks so as to render the task identifiable by other tasks running on the network. Thus, a message which is sent to a specific task in a workstation has to encode both the physical destination address of the receiving workstation, as well as the logical port ("socket") which identifies the application running thereon.

In other words, since the UNIX operating system is a multi-tasking environment, it is not enough to define only the destination address of the receiving computer: a logical port associated with a specific task or application must also be specified. The combination of the physical address and the logical port is referred to as a "network address of the logical port". In the terminology of UNIX and Internet, a network address of the logical port is referred to as a "socket name".

The following description assumes that communication between two workstations employs the Internet "stream" communication protocol. However, it will be apparent that other protocols may equally well be employed such as, for example, the Internet "datagram" protocol and so on.

It should further be understood that, in accordance with the UNIX operating system, once a connection is established between respective sockets in different workstations, there exists a logical bidirectional connection between the sockets, whereupon the application which interacts through the respective socket may refer thereto as if it were a standard output or input stream. Thus, if a connection is established between a first socket in a first workstation and a second socket in a second workstation, the application associated with the first socket may interact with the application associated with the second socket simply by invoking "WRITE" or "READ" instructions. The underlying communication layers in the operating system structure will take care to ensure that the message is properly routed to the required destination.

It should also be added, for the sake of completeness, that the socket mechanism is well known to those versed in the UNIX operating system and is therefore not discussed in greater detail.

In the description which follows, whenever a service supported by the UNIX operating system is invoked, the service name will be symbolically indicated, omitting, for the sake of simplicity, reference to any parameters transferred to the service or received therefrom. The precise syntax for calling the UNIX services is familiar to those skilled in the art and likewise, since the services themselves are not a specific feature of the present invention, a detailed description thereof is unnecessary.

At the outset, the groupware application running on the server 11 invokes the "socket" primitive supplied by the operating system in order to obtain a socket number which will be associated therewith. This having been achieved, it is required to bind the socket number to a socket name (SN) and this is achieved by the "bind" service which is fed with the socket number obtained as a parameter in the previous stage. The "bind" service performs a series of steps, some of which are responsible for the binding of the logical socket to the global Internet address. To this end, the standing groupware application has a defined logical port or socket bound to which is a global Internet address through which communication with another workstation in the network may be established.

Thereafter, the "listen" service is called, this being responsible for controlling the number of simultaneous communication acknowledgements that the server 11 can handle. Upon completion of the initialization phase, the groupware application running on the server 11 prepares an Active Mail message which conforms to the MIME standard. The message is categorized as "Active Mail" and has embedded therein the encoded socket name obtained by the previous step.

The message is now sent across the network to its destination, i.e. client workstation 13. The server 11 now performs the "accept" service which, when invoked, permits the server 11 to receive communication requests addressed to a specific socket name so as to establish communication with a calling workstation.

Meanwhile, at the client workstation 13, the user activates the Read Mail program for accessing his mailbox. Upon selecting the message sent from the server 11, the "Metamail" service is activated which assumes that the message conforms to the MIME standard and retrieves therefrom the message category, i.e. "Active Mail".

The thus decoded message category is cross-referenced in the mailcap file in order to determine which service is to be invoked responsive to a message of category Active Mail.

In this case, it is assumed that the mailcap file includes an entry which specifies that the Active Mail category corresponds to the service "am connect". As a result, the "am connect" program is invoked which performs several steps.

First, the encoded socket number embedded in the message is decoded. Thereafter, the "socket" service is invoked in orderto obtain a socket number in client workstation 13 which will be connected to the pre-defined socket of the server 11. The "connect" service is now called whereby a bi-directional communication channel between the two respective sockets is established.

From the perspective of the "connect" service, the originating computer is the client workstation 13 and the destination computer is the server 11. Since the server 11 is in the "Accept" status awaiting a communication request for coupling a remote workstation to the same socket of the server 11 as is now requested by the "connect" service, the required bi-directional connection is now established. At this stage, a window is opened on the user's screen of the client workstation 13, whereby the application in the client workstation 13 mediates between the underlying socket connection and the thus-defined window. This gives rise to application-dependent communication between the groupware application running on the server 11 and the mediating application in the client workstation 13, whereby the user of the client workstation 13 may interactively communicate with the groupware application running on the server 11 through the corresponding sockets in the server 11 and the client workstation 13.

In the case, as described above, where a groupware application initiates the communication so as to permit multiple, simultaneous processing thereof by a plurality of independent users, there is an implicit assumption that the server, on which the groupware application is loaded, is logged on or active when the user at the second workstation reads the appropriate mailbox message. Such an assumption is likely to be valid, particularly in cases in which the groupware application initiates the communication from a server.

It should further be noted that, whilst in the preferred embodiment, only two workstations are interconnected for two-directional interactive communication, in general a sending workstation can be connected to any number of receiving workstations in an analogous manner to that described. Thus, for example, the first workstation may be associated through a third logical port, different to the first logical port, to a fourth logical port associated with a third workstation. In similar manner, each of the second and third workstations may likewise be linked to yet further workstations.

Thus, the invention as described, permits not only simultaneous, real-time editing, for example, of a groupware document but allows another user not presently involved to be invited to participate. The invitation to participate, being effected through electronic mail, is non-intrusive, although the very act of reading the dispatched message causes the desired two-way interactive communication to be established.

In the preferred embodiment described above, only a single groupware application is connected to a single window in a receiving workstation. However, it will be readily appreciated that any number of applications can be connected to corresponding windows via appropriate logical ports in either a single workstation or, indeed, in a plurality of workstations.

It will further be noted that the invention produces a bi-directional communication which at its most general is between a server application and a client application, as shown in Fig. 5. In such case, if the client application operates within a window on the client's workstation, then the client application must perform additional steps in order to route the communication to the appropriate window.

However, if the window system of the receiver of an Active Mail message run a network-based window system, such as X under UNIX, then a simpler variant of the above protocol is available. In accordance with such a protocol, upon establishing the two-way interactive communication, the receiver notifies the sender of the global Internet address of its workstation (orX terminal) and executes a command which allows the server to interact directly with the receiver's window system. In such a case, the interactive communication is not between an application running on the server and a process on the client's workstation which then talks to the window, but rather a direct connection between the application running on the server and the window on the receiver's screen.

Furthermore, whilst in the preferred embodiment the two-way interactive communication or dialogue is effected through the computer network, this is not a requirement of the invention. Thus, consider a receiving user whose workstation is connected to the receiving user's telephone line either directly or via a PBX. The act of reading his mailbox and finding a message of the Active Mail category, may, for example, automatically dial the sender and permit the receiving user to establish a dialogue with the sender via the telephone. This approach can, likewise, be extended to any number of participants using shared telephone or conferencing techniques.

Yet a further use of the invention is to effect an interactive communication between two applications running on respective workstations, whilst obviating the need for human interference. Thus, for example, consider a program which prompts a user to enter information and then continues operation along different branches, in accordance with the data entered by the operator.

Instead of a human operator providing the desired information, it is clearly possible to incorporate the responses in a data file for remote reading by the application. In such case, the invention may be employed to initiate an interactive communication between the workstation on which the application is loaded to the remote workstation on which the data file is loaded. The data file itself is, of course, incorporated within an application which, upon sensing the presence of an Active Mail-type message in its mailbox, automatically reads the message so as to establish the required interactive communication with the sending workstation.

The present invention also permits a logical port to be forwarded from a linked user to a non-linked user, so as to connect the non-linked user to the application. Thus, suppose that User B receives from User A a message of the Active Mail category having embedded therein the logical port associated with User As workstation. He may perform the steps according to the invention in order to establish an interactive communication with User A. Additionally, or alternatively, providing that the "listen" service will manage a sufficient number of connection requests, he may forward the Active Mail message to a third user, User C who will then see the message in his mailbox as if it were directed from User A, there being no reference at all to the fact that this message was, in fact, dispatched by User B.

User C can then establish an interactive communication with User A in the normal manner. This facility is rendered possible because the logical port associated with the sending workstation is embedded in the message dispatched thereby: the embedding being effected when the message is configured and not when it is dispatched.

Such an approach might be used, for example, when User A dispatches a message to User B who reads the Active Mail-type message in order to establish the required interactive communication, and then decides that it would be beneficial to involve a third participant, User C. In such case, he need only forward the Active Mail message to User C, there being no requirement for User B to enter the electronic mail program, construct a suitable Active Mail-type message and dispatch it to User C.

In the detailed description of a preferred embodiment, no mention has been made of the type of data associated with the message other than that the message itself must, of course, be of the Active Mail category. However, in addition to the Active Mail message which simply establishes the required interactive communication, there may be attached thereto any other message of a supported category such as, for example, text, audio, graphics and so on. Such an approach obviates the need for two separate messages to be sent: one for establishing the required interactive communication and the other for dispatching electronic mail in the normal manner.

It will be understood that such an approach is possible only under electronic mail standards which support multiple message categories and attachments. Whilst this true of the MIME standard for "Internet" it is not, of course, universally true. Nevertheless, with slight modification, the invention is applicable even to electronic mail standards which are less versatile than MIME.

Thus, suppose that the electronic mail standard supports only text messages which may include typed attachments. Then the mail reading program can be upgraded to handle Active Mail attachments by calling AM Connect to process them. To invoke Active Mail, a suitably coded text message is written and despatched by electronic mail from the sending to the receiving workstations. Such a message might include an attachment of type "Active Mail" and the sending socket number (SN) might be included in the attachment. On reading such a message, the mail reading program reads the attachment and knows to connect the receiving workstation to socket SN of the sending workstation.

Suppose, however, that only text is supported by the electronic mail standard. In this case, to invoke Active Mail, a suitably coded text message is written and despatched by electronic mail from the sending to the receiving workstation. Such a message might include a banner reading: "Active Mail" and the sending socket name (SN) might be included as part of the message. The mail reading program can then be modified so that on reading such a message, the mail reading program sees the banner "Active Mail" and, upon decoding the socket name (SN) from the remainder of the message, knows to connect the receiving workstation to socket SN of the sending workstation.

Although the invention described with particular reference to Fig. 5 of the drawings relates to a network operating under UNIX and employing the Internet communications protocol, the more general description relating to Figs. 2 to 4 is applicable both to the Internet protocol and to other network protocols. Thus, it is contemplated that the arrangement described with reference to Figs. 2 to 4 may be easily adapted to any system having mail capabilities and a Point-to-Point communication, such as NOVELL and Net-Bios based networks, including LAN-Manager.

No mention has been made so far with regard to disconnecting a client from the server after having established an interactive communication in accordance with the invention. It should be noted that standard means may be employed by the client and/or the server in order to effect such disconnection.

Finally, whilst the invention has been described with reference to establishing an interactive communication between two or more workstations in the same network, it will be clear that it is equally feasible for the workstations to be in different interconnected networks. All that is required is for a unique network name to be reserved for the logical port in each workstation.

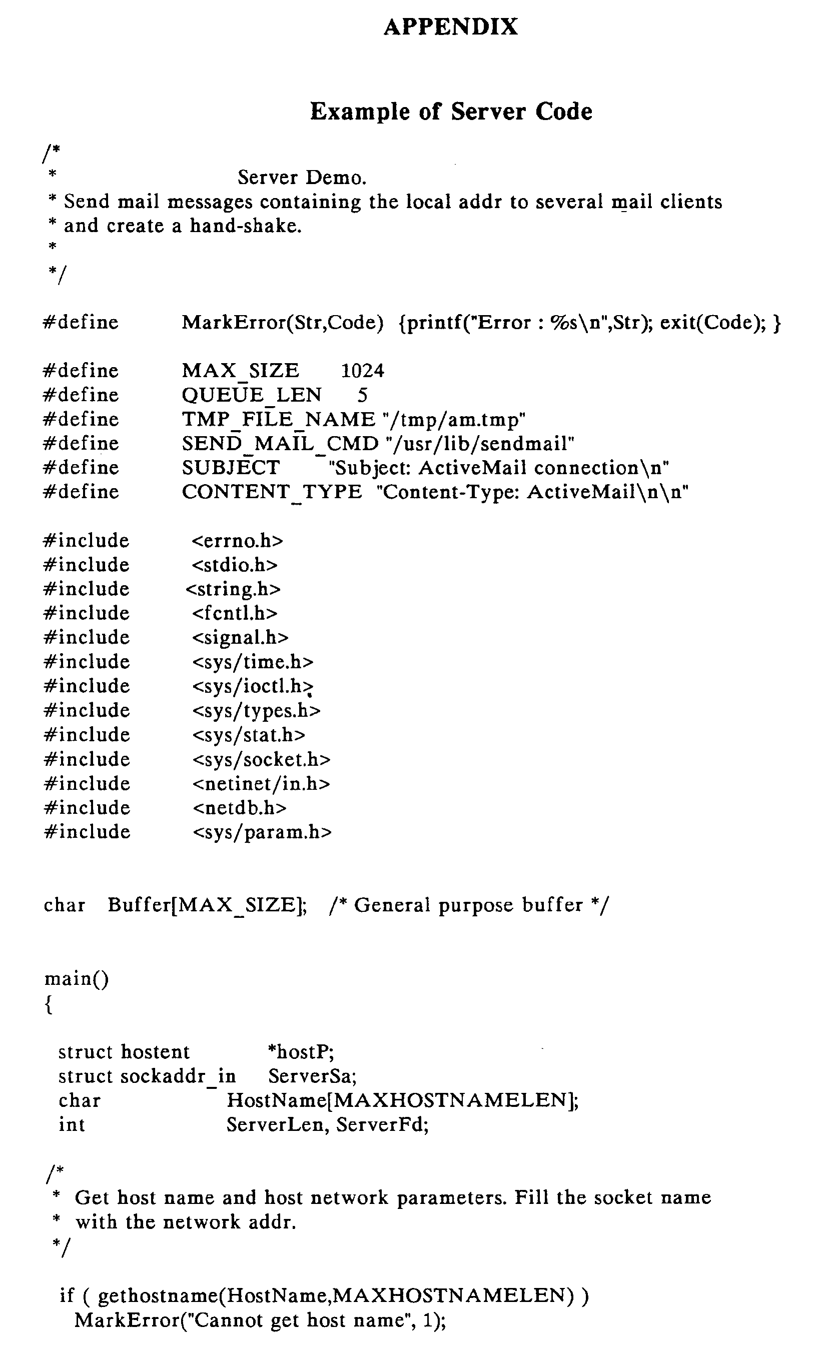

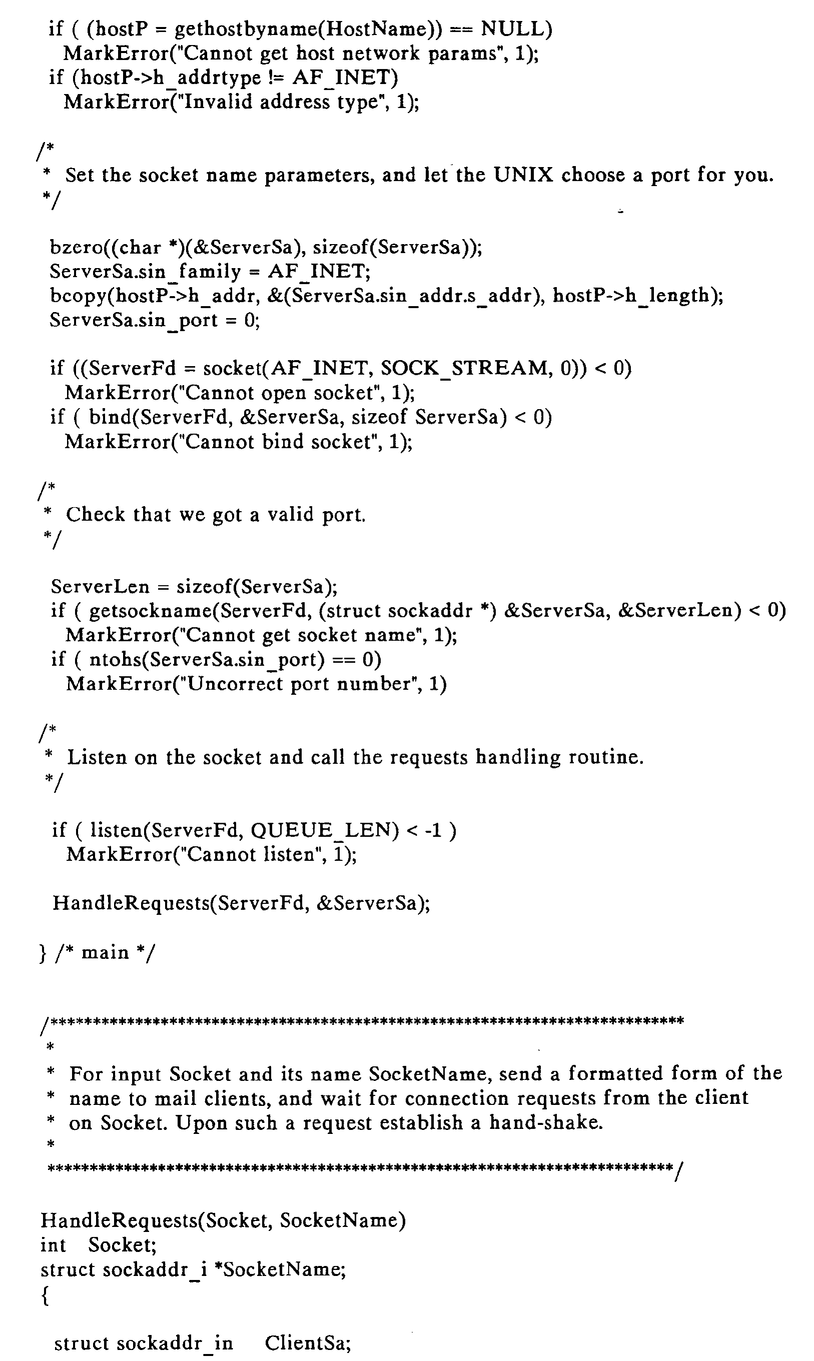

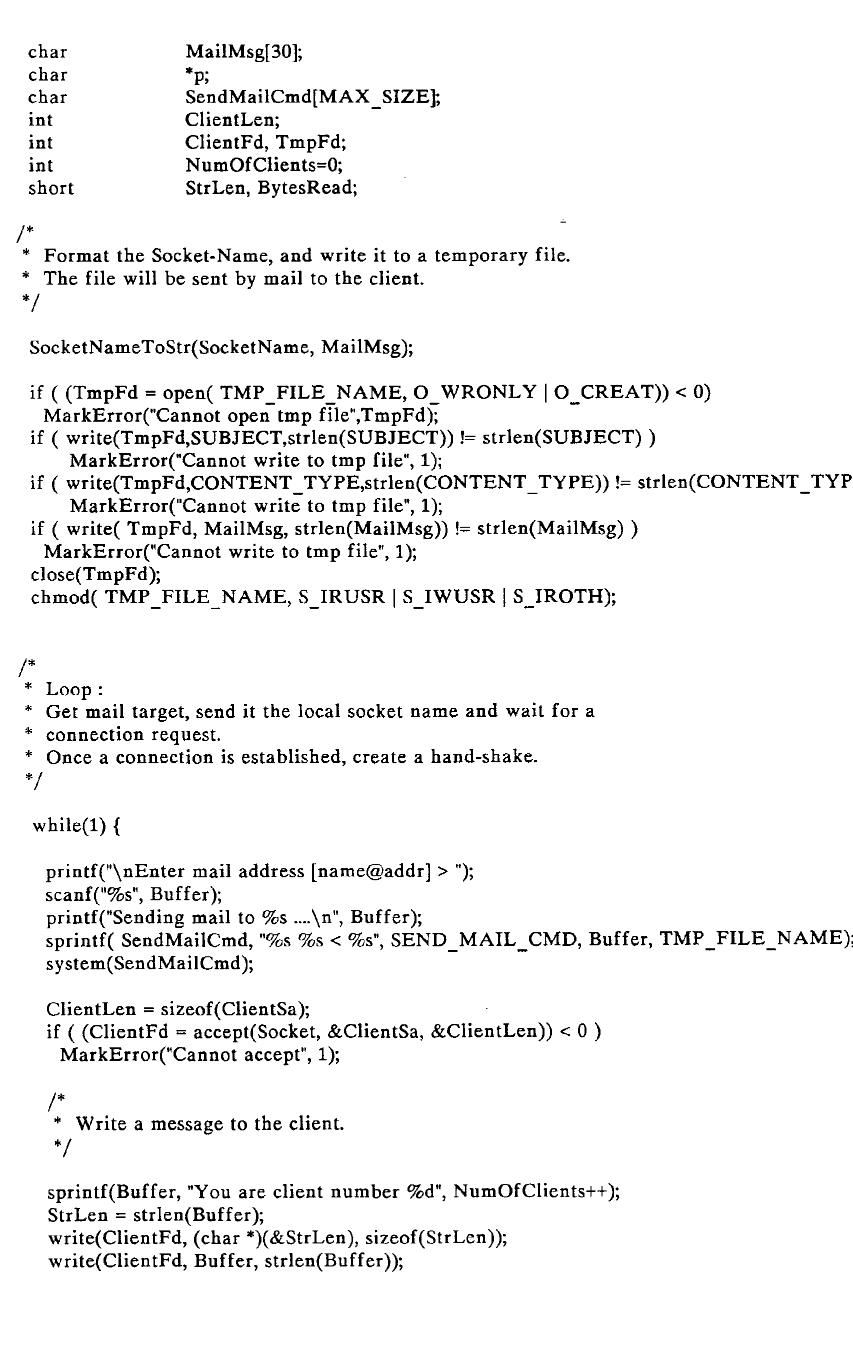

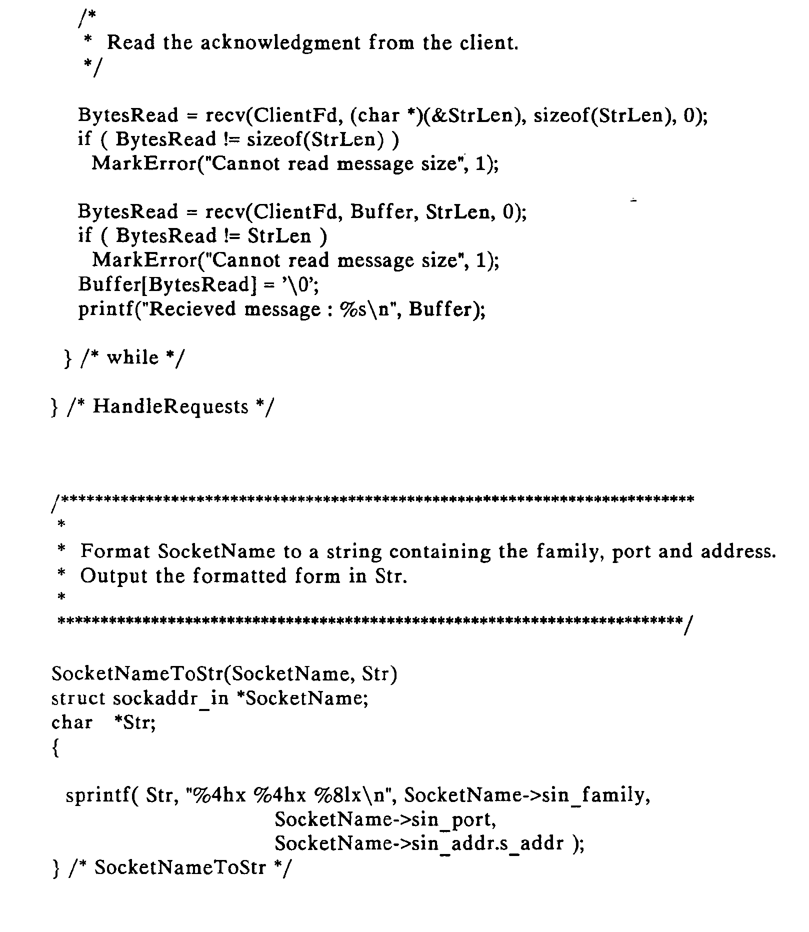

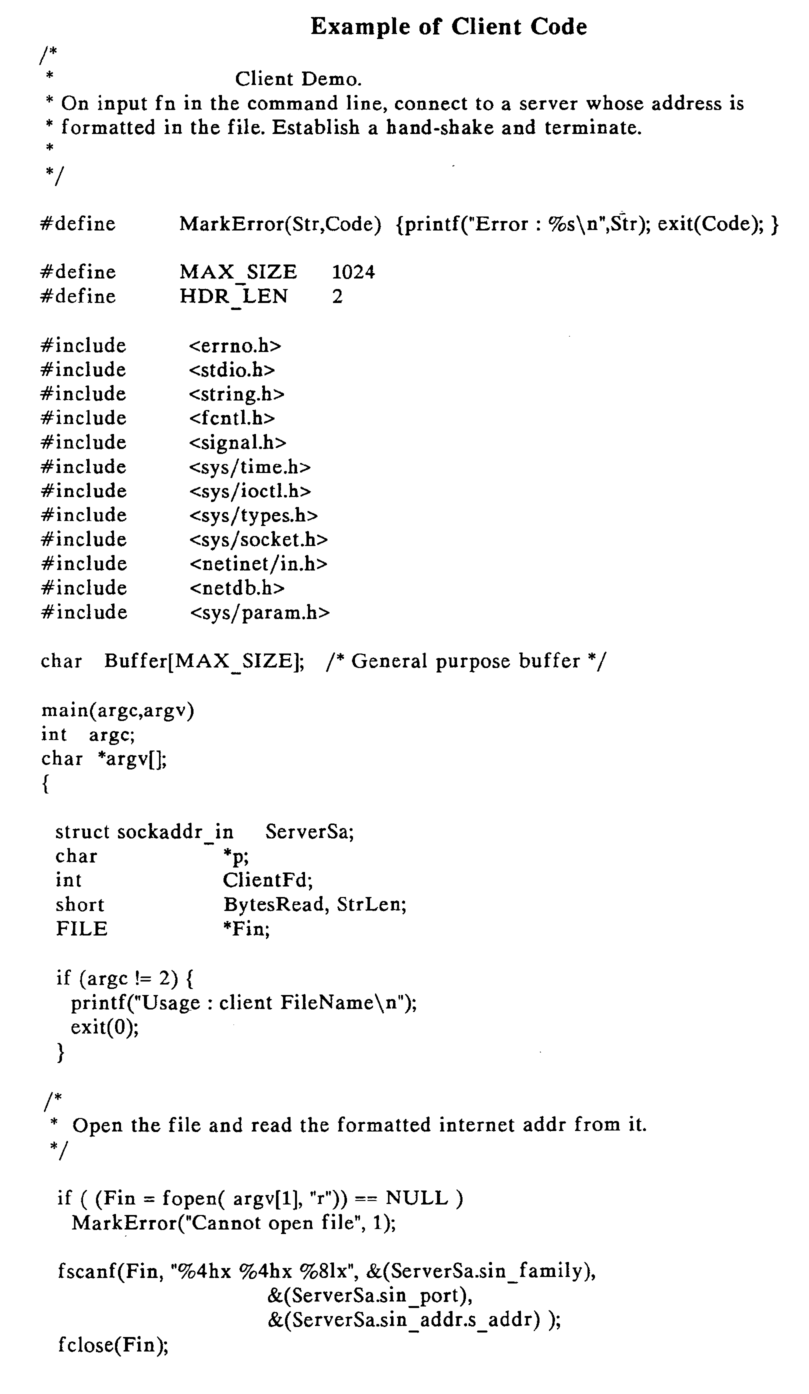

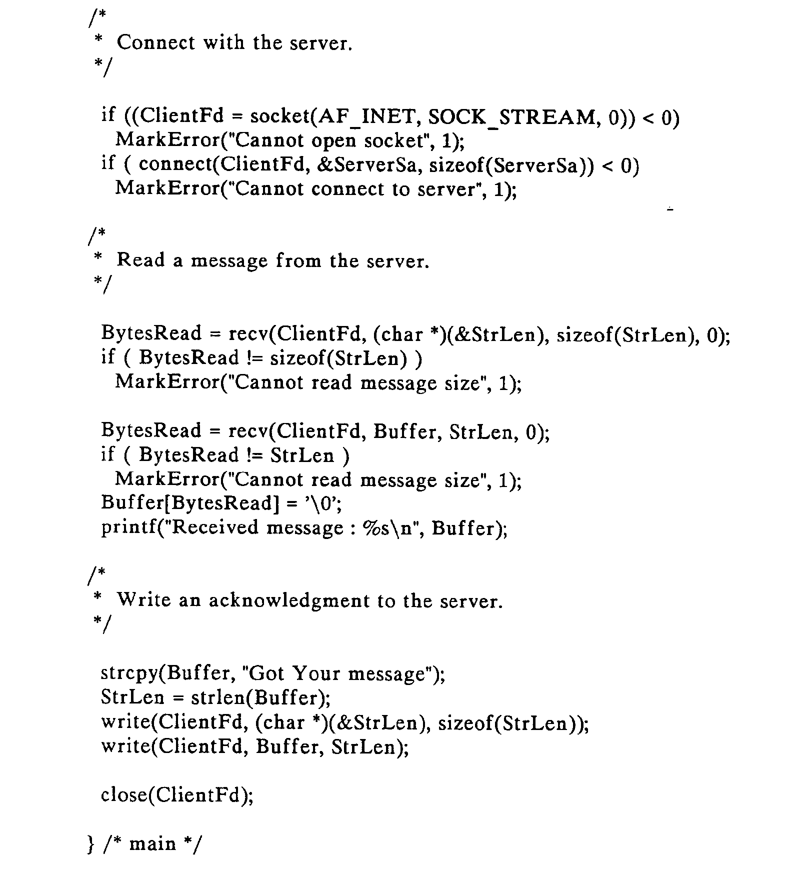

## Claims

1. For use in a computer network system (10) comprising at least first and second workstations (11, 13, 14, 15, 16, 17) adapted to send and receive messages by utilizing a suitable communication protocol and further adapted to exchange batch messages by means of an electronic mail program stored in each of said at least first and second workstations;
a method for establishing an interactive communication between said at least first and second workstations, said method characterized by the steps of:
(i) categorizing said batch messages such that a batch message of a predetermined category informs a receiving workstation that a sending workstation wishes to establish an interactive communication between a specified first logical port in the sending workstation and a specified second logical port in the receiving workstation;
(ii) sending a batch message of the predetermined category having therein a reference to said first logical port from the first workstation to the second workstation so as to be received thereby and stored in a storage means (19) containing a list of batch messages;
(iii) monitoring at the second workstation all batch messages in said storage means (19) at specified periods of time;
(iv) noting the presence in said storage means (19) of a batch message of said predetermined category;
(v) utilizing the communication protocol to send an initiation signal from the second logical port in the second workstation to the first logical port in the first workstation; and
(vi) responsive to receipt of the initiation signal, establishing an interactive two-way communication between the first logical port of the first workstation and the second logical port of the second workstation.

2. The method according to Claim 1, wherein the first logical port of the first workstation is associated with a groupware application.

3. The method according to Claim 1, wherein the first logical port of the first workstation and the second logical port of the second workstation are each associated with respective applications which interactively communicate with each other.

4. The method according to Claim 1, wherein the computer network system comprises at least two inter- connected networks and said first and second workstations are located in different ones of said interconnected networks.

5. The method according to Claim 1, wherein said batch message includes an attachment having therein data of a category supported by the electronic mail program, whereby upon reading the message, said data is automatically output to the second workstation.

6. The method according to Claim 1, wherein the first logical port in the first workstation serves only to establish a communication whereupon the communication is subsequently routed via a third logical port to the first workstation, thereby permitting multiple connections to be established to the first workstation via said first logical port.

7. The method according to Claim 1, wherein the first workstation establishes said interactive two-way communication with said second workstation and with at least one third workstation whereby all three workstations communicate simultaneously.

8. The method according to Claim 7, wherein the second workstation and said at least one third workstation are each coupled to different logical ports in the first workstation.

9. The method according to Claim 1, wherein the computer network system operates under UNIX.

10. The method according to Claim 1, wherein the computer network system operates under NOVELL.

11. The method according to Claim 1, wherein the computer network system operates under LAN Manager.

12. The method according to Claim 1, wherein:
multiple message categories are supported by the electronic mail program, and
a unique message category is defined indicating that the sending workstation wishes to establish said communication with the receiving workstation.

13. The method according to Claim 1, wherein:
multiple message categories are not supported by the electronic mail program,
the electronic mail program supports attachments, and
said reference to the first logical port is included within an attachment which serves as an argument to the electronic mail program on reading the batch message at the receiving workstation.

14. The method according to Claim 1, wherein:
multiple message categories are not supported by the electronic mail program,
the electronic mail program does not support attachments, a banner is included within the batch message to inform the electronic mail program that the sending workstation wishes to establish said communication with the receiving workstation, and
the first logical port of the sending workstation is encoded within the batch message and serves as an argument to the electronic mail program on reading the batch message at the receiving workstation.

15. The method according to Claim 1, wherein:
the second workstation runs a network based window system associated with a global network address of the second workstation and having means for determining whether a process running on a remote workstation is authorized to open a window (21) on the second workstation and communicate with said window (21), and
prior to step (v) there is included the further step of:
(ivb) authorizing the first logical port of the first workstation to open a window (21) on the second workstation;
whereby:
in step (v) the communication protocol is utilized in order to supply the global network address of the second workstation to the first logical port in the first workstation, and
upon performing step (vi), a signal is sent from the first workstation to the second workstation in order to open a window (21) on the second workstation with which the first workstation-may interact with a user on the second workstation.

16. The method according to Claim 15, wherein:
the network based window system is X said means for determining whether a process running on a remote workstation is authorized to open a window (21) on the second workstation and communicate with said window (21) comprising a list of addresses each in respect of a remote workstation which is authorized to open said window (21) and communicate therewith, and
in step (ivb) the first workstation is added to the list of addresses in the second workstation.
